# EUROPEAN PATENT APPLICATION

(11) **EP 2 138 040 A1**
(43) Date of publication of application: **30.12.2009**
(21) Application number: 09171530.0
(22) Date of filing: 14.06.2006
(51) Int. Cl.: A01N 47/34

(54) **Seed treatment formulation comprising phenylsemicarbazones**

(30) Priority: 16.06.2005 US 691077 P; 11.08.2005 US 707312 P; 28.12.2005 US 754267 P
(62) Divisional of application: 06754369.4
(71) Applicant: BASF SE, 67056 Ludwigshafen (DE)
(72) Inventor: Wilhelm, Ronald, 65719, Hofheim (DE); Gerber, Matthias, 67117, Limburgerhof (DE); Jilderda, Klaas, 6811, Arnhem (NL); Kruts, Marjo, 6629, at Appeltern (NL); Oloumi-Sadeghi, Hassan, Raleigh, NC 27614 (US); Cotter, Henry Van Tuyl, Raleigh, NC 27613 (US); Künast, Christoph, 67166, Otterstadt (DE); Gerhard, Ralf Willi, 55278, Dexheim (DE); Walter Fenner, Gerhard, 41089, Montequinto (ES); Klein, Clark D., Research Triangle, 27709 (US); Finch, Charles W., Garner, NC 27529 (US)
(74) Representative: Reitstötter - Kinzebach

(57) **Abstract**

The invention relates to seed treatment formulations comprising a phenylsemicarbazone of formula (I) 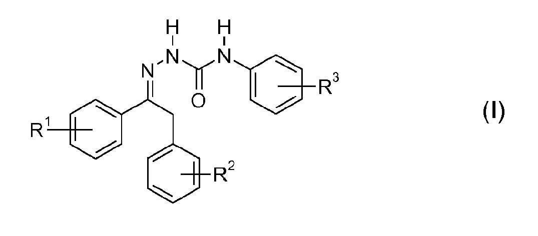 wherein R¹ and R² are each independently hydrogen, halogen, CN, C₁-C₄ alkyl, C₁-C₄ alkoxy, C₁-C₄ haloalkyl or C₁-C₄ haloalkoxy and R³ is C₁-C₄ alkoxy, C₁-C₄ haloalkyl or C₁-C₄ haloalkoxy, or agriculturally acceptable salts thereof.

The invention also relates to methods for seed treatment, to the use of phenylsemicarbazones for controlling plant pests, and to seeds treated with phenylsemicarbazones.

## Description

The invention relates to seed treatment formulations comprising phenylsemicarbazones such as metaflumizone (common name of 2'-[2-(4-cyanophenyl)-1-(α,α,α-trifluoro-m-tolyl)ethylidene]-4-(trifluoromethoxy)carbanilohydrazide) or an agriculturally acceptable salt thereof. The invention also relates to methods for seed treatment, to the use of phenylsemicarbazones for controlling plant pests, and to seeds treated with phenylsemicarbazones.

Throughout history, arthropod pests, most notably insects, have been a major source of trouble, and are still among the main reasons for famine. It has been estimated that about one sixth of the overall agricultural production in the industrialized world and an even higher percentage in the developing countries are currently lost to insects. In addition to direct feeding damage caused by the pests, injury renders the plants more susceptible to secondary infections by bacteria, fungi, and other microorganisms. Even plant products which are technically still edible may be aesthetically impaired to such a degree that they are actually not marketable any more.

During the time period before and during germination and sprouting plants tend to be especially vulnerable to pests, not only because of the low size of the developing plant organs which makes them incapable of coping with much damage, but also because some of the natural plant defense mechanisms are not yet developed at that stage of development. Protection of plants in the pre- and post-germination stage is therefore instrumental in reducing pest damage.

Synthetic organic pesticides are widely used for pest control and plant protection. To be effective during the emergence of crops, they may be dispersed over the agricultural area, or, more rationally, directly applied to the soil. The chemical aspects of protecting seedlings against insect feeding damage are well understood by now, making use of a large variety of ingestible toxins, contact toxins, repellents and other substances.

However, the conventional application of pesticides to plants and their environment can suffer from a large number of disadvantages: Resistance to a given pesticide often develops quickly, especially if usage is very widespread, so new agents will have to be developed continually. The possible detrimental effects of pesticides on public health and on the environment are a matter of public concern. Some of the most effective pesticide classes have actually been found to have high toxicity to water organisms. More specifically, lavish use of pesticides is not only expensive but also poses a serious health hazard to agricultural laborers; this is a particular concern for dusts or dustable powders. It is therefore advisable to use as low dosages as possible. Moreover, the efficacy of chemical pesticides against earth-born arthropods, especially against sub-terraneous species such as most dipteran larvae, leaves much to be desired. Proper management of pests requires good timing and much hands-on work and may, depending on the formulation used, be very sensitive to abiotic factors which are difficult to control, such as wind, temperature, and rain fall. There is always the generally undesirable possibility of pesticides diffusing away from the desired site of action ("pesticide drift"). It should also be pointed out that indiscriminate use of pesticides affords protection not only to crops but also to weeds, while on the other hand it may do serious harm to useful insects (both insect predators and economically valuable species such as the honey bee).

Ideally, the pesticide should therefore be effective in comparatively low dosages, not liable to large-scale diffusion into the environment and away from the crops to be protected (thereby leading to undesired "bystander effects"), and suitable for such procedures as minimize both exposure of humans and hands-on time. Furthermore, it should be active against a broad spectrum of pests and preferably combine immediate effects ("knock-down" or "burn-down") with prolonged control.

An object of the present invention was to provide a method for the protection of crops from feeding damage by dipteran larvae and other plant pests. Preferably, it should also solve the problem of reducing the dosage rate, combine knock-down activity with prolonged control and/or be suitable for resistance management.

Surprisingly, it has now been found that treatment of unsown plant seeds with phenylsemicarbazones such as metaflumizone or an agriculturally acceptable salt thereof not only protects the seeds themselves, but also provides post-emergence control of plant pests that feed on or otherwise damage the plants that grow from the seeds.

The invention therefore relates to a seed treatment formulation comprising a phenylsemicarbazone of the formula (I) 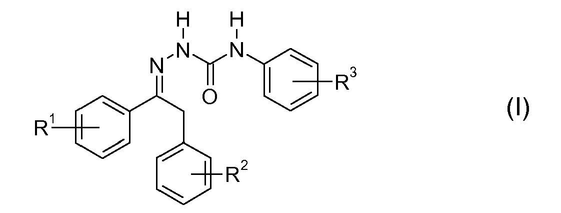 wherein R¹ and R² are each independently hydrogen, halogen, CN, C₁-C₄ alkyl, C₁-C₄ alkoxy, C₁-C₄ haloalkyl or C₁-C₄ haloalkoxy and R³ is C₁-C₄ alkoxy, C₁-C₄ haloalkyl or C₁-C₄ haloalkoxy,
or an agriculturally acceptable salt thereof.

The invention offers several advantages: It focuses pesticide effects on crops and their pests, thereby minimizing human exposure and environmental side-effects as well as the total dosage required, is effective against underground plant pests, less dependent on abiotic factors and conveniently applied.

The term halogen denotes in each case fluorine, bromine, chlorine or iodine.

The term "C₁-C₄ alkyl" as used herein refers to a branched or unbranched saturated hydrocarbon group having 1 to 4 carbon atoms, for example methyl, ethyl, propyl, 1-methylethyl, butyl, 1-methylpropyl, 2-methylpropyl or 1,1-dimethylethyl.

The term "C₁-C₄ alkoxy" refers to straight-chain or branched alkyl groups having 1 to 4 carbon atoms (as mentioned above) bonded through oxygen linkages at any bond in the alkyl group. Examples include methoxy, ethoxy, propoxy, isopropoxy, butoxy, sec-butoxy, isobutoxy and tert-butoxy.

The term "C₁-C₄ haloalkyl" as used herein refers to a straight-chain or branched alkyl group having 1 to 4 carbon atoms (as mentioned above), where some or all of the hydrogen atoms in these groups may be replaced by halogen atoms as mentioned above, for example C₁-C₂ haloalkyl, such as chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, 1-chloroethyl, 1-bromoethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl or pentafluoroethyl, or C₃-C₄ haloalkyl, such as 2-fluoropropyl, 3-fluoropropyl, 2,2-difluoropropyl, 2,3-difluoropropyl, 2-chloropropyl, 3-chloropropyl, 2,3-dichloropropyl, 2-bromopropyl, 3-bromopropyl, 3,3,3-trifluoropropyl, 3,3,3-trichloropropyl, 2,2,3,3,3-pentafluoropropyl, heptafluoropropyl, 1-(fluoromethyl)-2-fluoroethyl, 1-(chloromethyl)-2-chlorethyl, 1-(bromomethyl)-2-bromoethyl, 4-fluorobutyl, 4-chlorobutyl, 4-bromobutyl or nonafluorobutyl.

The term "C₁-C₄ haloalkoxy" refers to straight-chain or branched alkyl groups having 1 to 4 carbon atoms (as mentioned above) bonded through oxygen linkages at any bond in the alkyl group, where some or all of the hydrogen atoms in these groups may be replaced by halogen atoms as mentioned above, for example C₁-C₂ haloalkoxy, such as chloromethoxy, bromomethoxy, dichloromethoxy, trichloromethoxy, fluoromethoxy, difluoromethoxy, trifluoromethoxy, chlorofluoromethoxy, dichlorofluoromethoxy, chlorodifluoromethoxy, 1-chloroethoxy, 1-bromoethoxy, 1-fluoroethoxy, 2-fluoroethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloroethoxy and pentafluoroethoxy, or C₃-C₄ haloalkoxy, such as 2-fluoropropoxy, 3-fluoropropoxy, 2,2-difluoropropoxy, 2,3-difluoropropoxy, 2-chloropropoxy, 3-chloropropoxy, 2,3-dichloropropoxy, 2-bromopropoxy, 3-bromopropoxy, 3,3,3-trifluoropropoxy, 3,3,3-trichloropropoxy, 2,2,3,3,3-pentafluoropropoxy, heptafluoropropoxy, 1-(fluoromethyl)-2-fluoroethoxy, 1-(chloromethyl)-2-chlorethoxy, 1-(bromomethyl)-2-bromoethoxy, 4-fluorobutoxy, 4-chlorobutoxy, 4-bromobutoxy or nonafluorobutoxy.

Among the phenylsemicarbazones of formula (I), preference is given to those in which the variables R¹, R² and R³, independently of one another, but in particular in combination, have the meanings given below:
- R¹: is C₁-C₄ haloalkyl, in particular trifluoromethyl;
- R²: is cyano (CN);
- R³: is C₁-C₄ haloalkoxy, in particular trifluoromethoxy.

Most suitable is a compound of the formula (I), wherein R¹ is 3-CF₃ (meta position), R² is 4-CN (para position) and R³ is 4-OCF₃ (meta position), i.e. metaflumizone.

Metaflumizone is the common name of 2-[2-(4-cyanophenyl)-1-[3-(trifluoromethyl)-phenyl]ethylidene]-N-[4-(trifluoromethoxy)phenyl]hydrazinecarboxamide (IUPAC nomenclature: (*EZ*)-2'-[2-(4-cyanophenyl)-1-(a,a,a-trifluoro-m-tolyl)ethylidene]-4-(trifluoromethoxy)carbanilohydrazide), having the following structure (Ia):

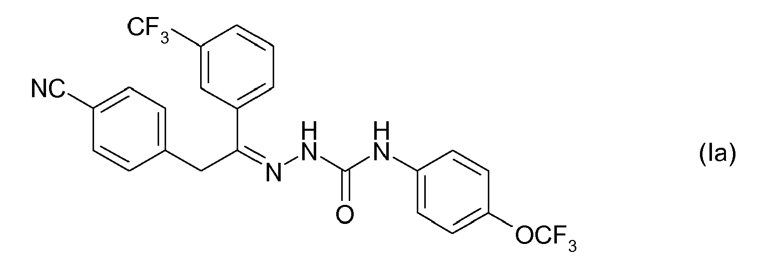

The compound exists in two geometric isomers with regard to the C-N double bond, i.e. 4-{(2E)-2-({[4-(trifluoromethoxy)anilino]carbonyl}hydrazono)-2-[3-(trifluoromethyl)-phenyl]ethyl}benzonitrile and 4-{(2Z)-2-({[4-(trifluoromethoxy)anilino]carbonyl}-hydrazono)-2-[3-(trifluoromethyl)phenyl]ethyl}benzonitrile. It is to be understood that the term "metaflumizone" includes both the E- and Z-isomer of the compound as defined above, as well as any mixture thereof in any ratio.

Metaflumizone is a member of the hydrazinecarboxamide group with a wide insecticidal spectrum. Metaflumizone and its application to the area under crops have been described in EP-A 0 462 456.

E- and Z-isomers of hydrazinecarboxamides and other semicarbazones and their conversion have been described in general in WO05/047235, incorporated herein by reference. In particular, reference is made to the description of the above geometric isomers of metaflumizone, which WO05/047235 refers to as I.1-E and I.1-Z, their synthesis and conversion (examples 1 to 3 of WO05/047235) as well as mixtures of the E- and Z-isomer, especially with high E/Z-ratio. Because the insecticidal activity of the E-isomer is generally higher than that of the Z-isomer, metaflumizone having a E/Z-ratio higher than 1:1 may be preferred.

Suitable agriculturally acceptable salts of the phenylsemicarbazones of formula (I) are acid addition salts, in particular salts with such anions as do not reduce the pesticidal effects of the phenylsemicarbazones, e.g. chloride, bromide, fluoride, sulfate, hydrogen sulfate, phosphate, hydrogen phosphate, dihydrogen phosphate, nitrate, carbonate, hydrogen carbonate, hexafluorosilicate, hexafluorophosphate benzoate and the anions of C₁₋₄ alkyl acids, in particular formiate, acetate, propionate and butyrate.

Further suitable agriculturally acceptable salts of the phenylsemicarbazones of formula (I) are in particular salts with such cations as do not reduce the pesticidal effects of the phenylsemicarbazone. Suitable cations are in particular alkali metal ions, preferably lithium, sodium and potassium; alkaline earth metal ions, preferably calcium, magnesium and barium; transition metals, preferably manganese, copper, zinc and iron; ammonium ions; positively ionized amines, preferably ammonium carrying one to four C₁₋₄ alkyl substituents or one phenyl or benzyl substituent in addition to zero to three C₁₋₄ alkyl substituents, more preferably diisopropylammonium, tetramethylammonium, trimethylbenzylammonium and tetrabutylammonium; phosphonium ions; sulfonium ions, preferably tri(C₁₋₄-alkyl)sulfonium; and sulfoxonium ions, preferably tri(C₁₋₄-alkyl)sulfoxonium. Here the term "C₁₋₄ alkyl" is used to refer to a saturated linear or branched hydrocarbon radical having 1 to 4 carbon atoms, e.g. methyl, ethyl, propyl, methylethyl, butyl, 1-methylpropyl, 2-methylpropyl or dimethylethyl.

As used herein, the term "seed" denotes any resting stage of a plant that is physically detached from the vegetative stage of a plant and/or may be stored for prolonged periods of time and/or can be used to re-grow another plant individual of the same species. Here, the term "resting" refers to a state wherein the plant retains viability, within reasonable limits, in spite of the absence of light, water and/or nutrients essential for the vegetative (i.e. non-seed) state. In particular, the term refers to true seeds but does not embraces plant propagules such as suckers, corms, bulbs, fruit, tubers, grains, cuttings and cut shoots.

As used herein, the term "plant" means an entire plant or parts thereof. The term "entire plant" refers to a complete plant individual in its vegetative, i.e. non-seed stage,
characterized by the presence of an arrangement of roots, shoots and foliage, depending on the developmental stage of the plant also flowers and/or fruits, all of which are physically connected to form an individual which is, under reasonable conditions, viable without the need for artificial measures. The term may also refer to an entire plant harvested as such.

The term "plant parts" refers to roots, shoots, foliage, flowers or other parts of the vegetative stage of the plant, which, when dislodged and disconnected from the rest, are incapable of survival, unless supported by artificial measures or able to re-grow the missing parts to form an entire plant. As used herein, fruits are also considered as plant parts.

As used herein, the term "root" refers to parts of a plant which are normally, in order to fulfill their physiological functions, located beneath the soil surface. Preferably, the term denotes the parts of a plant which are below the seed and have directly emerged from the latter, or from other roots, but not from shoots or foliage.

As used herein, the "shoots and foliage" of a plant are to be understood to be the shoots, stems, branches, leaves and other appendages of the stems and branches of the plant after the seed has sprouted, but not including the roots of the plant. It is preferable that the shoots and foliage of a plant be understood to be those non-root parts of the plant that have grown from the seed and are located a distance of at least one inch away from the seed from which they emerged (outside the region of the seed), and more preferably, to be the non-root parts of the plant that are at or above the surface of the soil.

As used herein, "fruits" are considered to be the parts of a plant which contain seeds and/or serve to spread seeds, and/or which may be removed from a plant without impairing its viability.

According to the present invention, the seed treatment comprises applying a phenylsemicarbazone of formula (I) or an agriculturally acceptable salt thereof to a seed. Although the present method can be applied to a seed in any physiological state, it is preferred that the seed be in a sufficiently durable state that it incurs no significant damage during the treatment process. Typically, the seed is a seed that has been harvested from the field; removed from the plant; and/or separated from the fruit and any cob, pod, stalk, outer husk, and surrounding pulp or other non-seed plant material. The seed is preferably also biologically stable to the extent that the treatment would cause no biological damage to the seed. In one embodiment, for example, the treatment can be applied to seed that has been harvested, cleaned and dried to a moisture content below about 15% by weight. In an alternative embodiment, the seed can be one that has been dried and then primed with water and/or another material and then re-dried before or during the treatment with the phenylsemicarbazone of formula (I) or the agriculturally acceptable salt thereof.

The term seed treatment comprises all suitable seed treatment and especially seed dressing techniques known in the art, such as seed coating (e.g. seed pelleting), seed dusting and seed imbibition (e.g. seed soaking). Here, "seed treatment" refers to all methods that bring seeds and the phenylsemicarbazone of formula (I) or the agriculturally acceptable salt thereof into contact with each other, and "seed dressing" to methods of seed treatment which provide the seeds with an amount of the phenylsemicarbazone of formula (I) or the agriculturally acceptable salt thereof, i.e. which generate a seed comprising the phenylsemicarbazone of formula (I) or an agriculturally acceptable salt thereof. In principle, the treatment can be applied to the seed at any time from the harvest of the seed to the sowing of the seed. The seed can be treated immediately before, or during, the planting of the seed, for example using the "planter's box" method. However, the treatment may also be carried out several weeks or months, for example up to 12 months, before planting the seed, for example in the form of a seed dressing treatment, without a substantially reduced efficacy being observed.

Expediently, the treatment is applied to unsown seed. As used herein, the term "unsown seed" is meant to include seed at any period from the harvest of the seed to the sowing of the seed in the ground for the purpose of germination and growth of the plant.

When it is said that unsown seed is "treated", such treatment is not meant to include those practices in which the pesticide is applied to the soil, rather than directly to the seed.

By applying the treatment to the seed prior to the sowing of the seed the operation is simplified. In this manner, seeds can be treated, for example, at a central location and then dispersed for planting. This permits the person who plants the seeds to avoid the handling and use of the phenylsemicarbazone of formula (I) or the agriculturally acceptable salt thereof and to merely handle and plant the treated seeds in a manner that is conventional for regular untreated seeds, which reduces human exposure to the compound.

In each embodiment of the invention, it is preferred that the phenylsemicarbazone of formula (I) or the agriculturally acceptable salt thereof is applied to a seed in an effective amount, that is, an amount sufficient to provide protection against arthropod pests to the seed and/or the plant that grows from the seed. As used herein, "protection" is achieved if the percentage of feeding damage to the seed and/or the plant at 10 days after infestation (DAI) with the pest is significantly reduced for treated seeds or plants grown from treated seeds as compared to untreated seeds or plants grown from untreated seeds. In order to be effective, the phenylsemicarbazone of formula (I) or the agriculturally acceptable salt thereof is generally employed in an amount of from 1 to 500 g, preferably 10 to 200 g, per 100 kilograms of seed.

According to the present invention one purpose of said seed treatment is to control an arthropod pest, especially an insect pest. Such a seed treatment thus involves an insecticidal effect or an insecticidal activity providing protection against damage done by the insect pest to a seed and/or a plant grown from the seed.

As used herein, the terms "insecticidal effect" and "insecticidal activity" mean any direct or indirect action on the target pest (which may be any pest, but includes according to the invention an arthropod pest and preferably an insect pest) that results in reduction of feeding damage on the treated seeds as well as on the fruits, roots, shoots and/or foliage of plants grown from treated seeds as compared untreated seeds or to plants grown from untreated seeds, respectively. The terms "active against a (first or second) pest" also have the same meaning. Such direct or indirect actions include killing the pest, repelling the pest from the plant seeds, fruits, roots, shoots and/or foliage, inhibiting the feeding of the pest on, or the laying of its eggs on, the plant seeds, fruits, roots, shoots and/or foliage, and inhibiting or preventing reproduction of the pest.

The target pest for the present invention is any developmental stage, preferably an adult or larva/nymph, of any insect or other arthropod pest that feeds on the seed, fruits, roots and/or shoots and foliage of the plant that is to be protected an/or lays its eggs on the plant to be protected and/or otherwise causes economically significant damage to plants or plant parts (e.g. by "herding" other pests and/or by using plants or plant parts for nesting, as known for, e.g., certain ant species). Such pests include but are not limited to stinging, chewing, biting or sucking insects, in particular those belonging to the following taxa:
- pests from the order Lepidoptera, for example, Acleris spp., Adoxophyes spp., Aegeria spp., Agrotis spp., Alabama argillaceae, Amylois spp., Anticarsia gemmatalis, Archips spp, Argyrotaenia spp., Autographa spp., Busseola fusca, Cadra cautella, Carposina nipponensis, Chilo spp., Choristoneura spp., Clysia ambiguella, Cnaphalocrocis spp., Cnephasia spp., Cochylis spp., Coleophora spp., Crocidolomia binotalis, Cryptophlebia leucotreta, Cydia spp., Diatraea spp., Diparopsis castanea, Earias spp., Ephestia spp., Eucosma spp., Eupoecilia ambiguella, Euproctis spp., Euxoa spp., Grapholita spp., Hedya nubiferana, Heliothis spp., Hellula undalis, Hyphantria cunea, Keiferia lycopersicella, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis, Pammene spp., Pandemis spp., Panolis flammea, Pectinophora gossypiella, Phthorimaea operculella, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni and Yponomeuta spp.;
- pests from the order Coleoptera, for example, Agriotes spp., Anthonomus spp., Atomaria linearis, Chaetocnema tibialis, Cosmopolites spp., Curculio spp., Dermestes spp., Diabrotica spp., the Elateridae family ("click beetles"), Epilachna spp., Eremnus spp., Leptinotarsa decemlineata, Lissorhoptrus spp., Melolontha spp., Orycaephilus spp., Otiorhynchus spp., Phlyctinus spp., Popillia spp., Psylliodes spp., Rhizopertha spp., Sitophilus spp., Sitotroga spp., Tanymecus spp., Tenebrio spp., Tribolium spp. and Trogoderma spp.;
- pests from the order Orthoptera, for example, Blatta spp., Blattella spp., Gryllo-talpa spp., Leucophaea maderae, Locusta spp., Periplaneta ssp., Phytophaga spp. and Schistocerca spp.;
- pests from the order Isoptera, for example, Reticulitermes ssp;
- pests from the order Thysanoptera, for example, Franklinella spp., Hercinothrips spp., Taeniothrips spp., Thrips palmi, Thrips tabaci and Scirtothrips aurantii;
- pests from the order Heteroptera, for example, Cimex spp., Distantiella theobroma, Dysdercus spp., Euchistus spp., Eurygaster spp., Leptocorisa spp., Nezara spp., Piesma spp., Rhodnius spp., Sahlbergella singularis, Scotinophara spp. and Triatoma spp.;
- pests from the order Homoptera, for example, Aleurothrixus floccosus, Aleyrodes brassicae, Aonidiella spp., Aphididae, Aphis spp., Aspidiotus spp., Bemisia tabaci, Ceroplaster spp., Chrysomphalus aonidium, Chrysomphalus dictyospermi, Coccus hesperidum, Empoasca spp., Eriosoma larigerum, Erythroneura spp., Gascardia spp., Laodelphax spp., Lacanium corni, Lepidosaphes spp., Macrosiphus spp., Myzus spp., Nehotettix spp., Nilaparvata spp., Paratoria spp., Planococcus spp., Pseudaulacaspis spp., Pseudococcus spp., Psylla ssp., Pulvinaria aethiopica, Quadraspidiotus spp., Rhopalosiphum spp., Saissetia spp., Scaphoideus spp., Schizaphis spp., Sitobion spp., Trialeurodes vaporariorum, Trioza erytreae and Unaspis citri;
- pests from the order Hymenoptera, for example, Acromyrmex, Atta spp., Cephus spp., Diprion spp., Gilpinia polytoma, Hoplocampa spp., Lasius sppp., Monomorium pharaonis, Myrmex spp., Neodiprion spp, Solenopsis spp. and Vespa ssp.;
- pests from the order Diptera, for example, Aedes spp., Antherigona soccata, Bibio hortulanus, Calliphora erythrocephala, Ceratitis spp., Chrysomyia spp., Culex spp., Cuterebra spp., Dacus spp., Delia antiqua, Delia floralis, Drosophila melano-gaster, Fannia spp., Gastrophilus spp., Glossina spp., Hylemia spp., Hypoderma spp., Hyppobosca spp., Liriomysa spp., Lucilia spp., Melanagromyza spp., Musca ssp., Oestrus spp., Orseolia spp., Oscinella spp., Pegomya hyoscyami, Pegomya spp., Phorbia spp., Psila rosea, Rhagoletis pomonella, Sciara spp., Stomoxys spp., Tannia spp. and Tipula spp., in particular Delia antiqua, Delia floralis, Hylemia spp., Pegomya hyoscyami, Pegomya spp. and Phorbia spp.;
- pests from the order Collembola, for example, Onychiurus.

According to a particular embodiment, the target pest for the seed treatment of the present invention is an insect pest, preferably a dipteran pest, more preferably a root fly or a root maggot. Those belonging to the family Anthomyiidae, and more preferably those belonging to any of the genera *Psila, Delia, Phorbia, Hylemia* and *Pegomya* represent particular target pests of the present invention.

The present seed treatment can be used to control said target pests and/or to protect the seeds, roots and/or the above-ground parts of field, forage, plantation, glasshouse, orchard or vineyard crops, ornamentals, plantation or forest trees and/or any other plant(s) of interest. The seeds that are useful in the present invention can be the seeds of any plant species.

In particular, the seeds can be of tuberous and corm vegetables, such as arracacha, arrowroot, artichoke, canna, cassava, carrot, chayote root, chufa, dasheen, ginger, leren, onion, potato, radish, tanier, turmeric, yam bean, true yam; leafy vegetables, such as amaranth, arugula, cardoon, celery, celtuce, chervil, chrysanthemum, cress, dandelion, dock, endive, fennel, kale, leek, lettuce, orach, parsley, purslane, radicchio, rhubarb, spinach, swiss chard, tampala, head and stem brassica, such as broccoli, brussels sprout, cabbage, cauliflower, cavalo broccolo, curly cale, kohlrabi; leafy brassica greens, such as broccoli raab, cabbage, collards, kale, mizuna, mustard greens, mustard spinach, rape greens; fruiting vegetables such as beans, chili, postharvest, eggplant, groundcherry, pepino, pea, pepper, tomatillo, tomato. It is preferred that the seed be broccoli, carrot, cabbage, especially chinese cabbage, red cabbage, savoy cabbage, white cabbage, celery, cauliflower, kohlrabi and radish seeds.

It is most preferred if the pest belongs to the Anthomyiidae, in particular to any of the genera *Psila, Delia, Phorbia, Hylemia* and *Pegomya*, and the seed is a broccoli seed, a cabbage seed or a carrot seed.

The invention therefore also relates to a method for protecting tuberous or corm vegetables, leafy vegetables, leafy brassica greens, fruiting vegetables, especially broccoli, carrots and cabbage.

As used herein, ingredients comprise active ingredients and auxiliary agents.

In the present invention, an "active ingredient" is a compound or a combination of compounds which directly exerts a biologically relevant effect, preferably an insecticidal effect as described above.

To widen the spectrum of action, the active ingredient, i.e. the phenylsemicarbazone of formula (I) or an agriculturally acceptable salt thereof, can also be employed together with other active ingredients which are useful in seed treatment, for example together with fungicides, insecticides, molluscicides, nematicides, herbicides, algicides, bactericides, rodenticides, bird/mammal repellents, growth regulators, or else fertilizers.

The following list of active ingredients with which the phenylsemicarbazone of formula (I) or the agriculturally acceptable salt thereof can be used in accordance with the invention is intended to illustrate the possible combinations, but not to impose any limitation:
- Fungicides:
- Insecticides/acaricides:
   - organo(thio)phosphates, such as acephate, diazinon, malathion, methylparathion, profenofos, sulprofos, terbufos;
   - carbamates, such as methomyl, thiodicarb, fenothiocarb;
   - pyrethroids, such as cyfluthrin, cyhalothrin, cypermethrin, ethofenprox, permethrin, silafluofen;
   - nicotinic receptor agonists/antagonists, such as imidacloprid, thiamethoxam, nitenpyram, acetamiprid;
   - GABA antagonists, such as endosulfan, fipronil;
   - macrocyclic lactone insecticides, such as abamectin, emamectin, milbemectin, nemamectin, moxidectin, spinosad;
   - formamides, such as amitraz, chlordimeform, hydramethylnon, chlorfenamidine;
   - uncouplers, such as chlorfenapyr.
- Molluscicides.
- Nematicides.
- Herbicides.
- Algicides.
- Bactericides.
- Rodenticides.
- Bird / mammal repellents.
- Growth regulators.
- Fertilizers.

Molluscicides, nematicides, herbicides, algicides, bactericides, rodenticides, bird / mammal repellents, growth regulators and fertilizers are well known to a person skilled in the art.

According to a particular embodiment, the phenylsemicarbazone of formula (I) , in particular metaflumizone, or an agriculturally acceptable salt thereof is used in combination with fipronil.

If the phenylsemicarbazone of formula (I) or the agriculturally acceptable salt thereof is employed jointly with a further active ingredient, especially with fipronil, the ratio by weight of the phenylsemicarbazone of formula (I) or the agriculturally acceptable salt thereof to the amount of the further active ingredient(s) is usually in the range of 1:100 to 100:1, preferably in the range of 1:50 to 50:1, and in particular in the range of 1:10 to 10:1.

If the phenylsemicarbazone of formula (I) or the agriculturally acceptable salt thereof is employed jointly with a further active ingredient, the latter can be applied simultaneously with the phenylsemicarbazone of formula (I) or the agriculturally acceptable salt thereof or after a short time interval, for example within a few days before or after the treatment with the phenylsemicarbazone of formula (I) or its salt. In the case of simultaneous application, the treatment of the seed can be effected in one pass where a composition comprising the phenylsemicarbazone of formula (I) or the agriculturally acceptable salt thereof and the further active ingredient is applied, or else in separate passes where different formulations of the individual active ingredients are applied.

The active ingredient concentrations in ready-to-use preparation can be varied within substantial ranges. In general, they are in the range from 0.01 and 80% by weight, frequently in the range from 0.1 to 50 % by weight, preferably in the range from 0.5 and 20% by weight, based on the total weight of the preparation. The active ingredients can also successfully be used in concentrated form, it being possible to apply to the seed preparations with more than 80% by weight of active ingredient, or even the active ingredient without additions. The amount of additives will generally not exceed 30% by weight, preferably 20% by weight, and is, in particular, in the range of from 0.1 to 20% by weight, in each case based on the total weight of the preparation.

In principle, all customary methods of treating and in particular dressing such as coating (e.g. pelleting) and imbibing (e.g. soaking) seeds can be employed. Specifically, the seed treatment follows a procedure in which the seed is exposed to the specifically desired amount of a preparation comprising the phenylsemicarbazone of formula (I) or the agriculturally acceptable salt thereof. The preparation may be a formulation that is applied as such or after previously diluting it, e.g. with water; for instance, it may be expedient to dilute seed treatment formulations 2-10 fold leading to concentrations in the ready-to-use compositions of 0.01 to 60% by weight active compound by weight, preferably 0.1 to 40% by weight. Usually, a device which is suitable for this purpose, for example a mixer for solid or solid/liquid components, is employed until the preparation is distributed uniformly on the seed. Thus, the preparation can be applied to seeds by any standard seed treatment methodology, including but not limited to mixing in a container (e.g., a bottle, bag or tumbler), mechanical application, tumbling, spraying, and immersion. If appropriate, this is followed by drying.

Particular embodiments of the present invention comprise seed coating and imbibition (e.g. soaking). "Coating" denotes any process that endows the outer surfaces of the seeds partially or completely with a layer or layers of non-plant material, and "imbibition" any process that results in penetration of the active ingredient(s) into the germinable parts of the seed and/or its natural sheath, (inner) husk, hull, shell, pod and/or integument. The invention therefore also relates to a treatment of seeds which comprises providing seeds with a coating that comprises the phenylsemicarbazone of formula (I) or the agriculturally acceptable salt thereof, and to a treatment of seeds which comprises imbibition of seeds with the phenylsemicarbazone of formula (I) or the agriculturally acceptable salt thereof.

Coating is particularly effective in accommodating high loads of the phenylsemicarbazone of formula (I) or the agriculturally acceptable salt thereof, as may be required to treat typically refractory arthropod pests, while at the same time preventing unacceptable phytotoxicity due to the increased load of the phenylsemicarbazone of formula (I) or the agriculturally acceptable salt thereof.

Coating may be applied to the seeds using conventional coating techniques and machines, such as fluidized bed techniques, the roller mill method, rotostatic seed treaters, and drum coaters. Other methods such as the spouted beds technique may also be useful. The seeds may be pre-sized before coating. After coating, the seeds are typically dried and then transferred to a sizing machine for sizing.

Such procedures are known in the art. Seed coating methods and apparatus for their application are disclosed in, for example, U.S. Pat. Nos. 5,918,413, 5,891,246, 5,554,445, 5,389,399, 5,107,787, 5,080,925, 4,759,945 and 4,465,017.

In another particular embodiment, the solid phenylsemicarbazone of formula (I) or an agriculturally acceptable salt thereof, for instance as a solid fine particulate formulation, e.g. a powder or dust, can be mixed directly with seeds. Optionally, a sticking agent can be used to effect adherence of the solid, e.g. the powder, to the seed surface. For example, a quantity of seed can be mixed with a sticking agent (which increases adhesion of the particles on the surface of the seed) and optionally agitated to encourage uniform coating of the seed with the sticking agent. For example, the seed can be mixed with a sufficient amount of sticking agent, which leads to a partial or complete coating of the seed with sticking agent. The seed pretreated in this way is then mixed with a solid formulation containing the phenylsemicarbazone of formula (I) or the agriculturally acceptable salt thereof to achieve adhesion of the solid formulation on the surface of the seed material. The mixture can be agitated, for example by tumbling, to encourage contact of the sticking agent with the solid metaflumizone or its salt, thereby causing the solid phenylsemicarbazone of formula (I) or its salt to stick to the seed.

Another particular method of treating seed with the phenylsemicarbazone of formula (I) or the agriculturally acceptable salt thereof is imbibition. For example, seed can be combined for a period of time with an aqueous solution comprising from about 1% by weight to about 75% by weight of the phenylsemicarbazone of formula (I) or the agriculturally acceptable salt thereof in a solvent such as water. Preferably the concentration of the solution is from about 5% by weight to about 50% by weight, more preferably from about 10% by weight to about 25% by weight. During the period that the seed is combined with the solution, the seed takes up (imbibes) at least a portion of the the phenylsemicarbazone of formula (I) or the agriculturally acceptable salt thereof. Optionally, the mixture of seed and solution can be agitated, for example by shaking, rolling, tumbling, or other means. After the imbibition process, the seed can be separated from the solution and optionally dried in a suitable manner, for example by patting or air-drying.

In yet another particular embodiment of the present invention, the phenylsemicarbazone of formula (I) or the agriculturally acceptable salt thereof can be introduced onto or into a seed by use of solid matrix priming. For example, a quantity of the phenylsemicarbazone of formula (I) or the agriculturally acceptable salt thereof can be mixed with a solid matrix material, and then the seed can be placed into contact with the solid matrix material for a period to allow the phenylsemicarbazone of formula (I) or its salt to be introduced to the seed. The seed can then optionally be separated from the solid matrix material and stored or used, or, preferably, the mixture of solid matrix material plus seed can be stored or planted/sown directly.

As described above, the phenylsemicarbazone of formula (I) or the agriculturally acceptable salt thereof and optionally the further active ingredient(s) can be used as such, that is, without any auxiliary agents present. However, the phenylsemicarbazone of formula (I) or its salt and the further active ingredient(s) are typically applied to the seeds in the form of a composition.

As used herein, a "composition" comprises at least one active ingredient and at least one auxiliary agent.

The term "auxiliary agent" refers to a compound or combination of compounds which do not exert a biologically relevant effect of their own, but support the effects of the active ingredient(s). When auxiliary agents are used, their choice will depend on the active ingredients and on the procedures selected for seed treatment.

Usually, the compositions thus comprise an active ingredient component ("A") and an auxiliary agent component ("B"). The active ingredient component ("A") of the composition comprises the phenylsemicarbazone of formula (I) or the agriculturally acceptable salt thereof ("A1") and optionally one or more further active ingredient(s) ("A2"). The auxiliary agent component ("B") comprises one or more auxiliary agent(s).

In general, the compositions comprise from 0.005% by weight to 95% by weight, preferably from 0.1% by weight to 90% by weight, in particular from 5% by weight to 50% by weight, of the active ingredient component "A", the balance being formed by component "B". In this context, the active ingredients are employed in a purity of 90% to 100%, preferably 95% to 100% (according to NMR spectrum). According to a particular embodiment, component "A" essentially consists of the phenylsemicarbazone of formula (I) or the agriculturally acceptable salt thereof, i.e. the active ingredient of the composition is the phenylsemicarbazone of formula (I) or the agriculturally acceptable salt thereof.

In a particular embodiment of the invention, the composition may additionally comprise one or more repellents for warm-blooded animals, e.g. birds, dogs and hedgehogs, for example nonanoic acid vanillyl amide. The amount of repellent will preferably range from 0.1 to 5 % by weight, based on the total weight of the composition.

According to a particular embodiment, the composition is a seed treatment formulation. A seed treatment formulation according to the present invention comprises at least one auxiliary agent that is specifically suited for seed treatment, i.e. an auxiliary agent which in particular promotes adhesion of the phenylsemicarbazone of formula (I) or the agriculturally acceptable salt thereof to and/or penetration into the seeds and/or otherwise improves stability and/or manageability of the composition or the seeds treated therewith. Thus, the present invention also relates to a seed treatment formulation, which comprises the phenylsemicarbazone of formula (I) or the agriculturally acceptable salt thereof, at least one seed treatment auxiliary agent(s), and optionally one or more further auxiliary agents.

In particular, seed treatment auxiliary agents are selected from the group consisting of agents suitable for seed coating coating materials, agents suitable for solid matrix priming materials, penetration enhancers suitable for promoting seed imbibition, colorants, antifreezes, and gelling agents.

According to a preferred embodiment, the seed coating material comprises a binder (or sticker). Optionally, the coating material also comprises one or more additional seed treatment auxiliary agents selected from the group consisting of fillers and plasticizers.

Binders (or stickers) are all customary binders (or stickers) which can be employed in seed treatment formulations. Binders (or stickers) that are useful in the present invention preferably comprise an adhesive polymer that may be natural or partly or wholly synthetic and is without phytotoxic effect on the seed to be coated. Preferably, the binder (or sticker) is biodegradable. Preferably the binder or sticker is chosen to act as a matrix for the phenylsemicarbazone of formula (I) or the agriculturally acceptable salt thereof.

The binder (or sticker) may be selected from polyesters, polyether esters, polyanhydrides, polyester urethanes, polyester amides; polyvinyl acetates; polyvinyl acetate copolymers; polyvinyl alcohols and tylose; polyvinyl alcohol copolymers; polyvinylpyrolidones; polysaccharides, including starches, modified starches and starch derivatives, dextrins, maltodextrins, alginates, chitosanes and celluloses, cellulose esters, cellulose ethers and cellulose ether esters including ethylcelluloses, methylcelluloses, hydroxymethylcelluloses, hydroxypropylcelluloses and carboxymethylcellulose; fats; oils; proteins, including casein, gelatin and zeins; gum arabics; shellacs; vinylidene chloride and vinylidene chloride copolymers; lignosulfonates, in particular calcium lignosulfonates; polyacrylates, polymethacrylates and acrylic copolymers; polyvinylacrylates; polyethylene oxide; polybutenes, polyisobutenes, polystyrene, polyethyleneamines, polyethylenamides; acrylamide polymers and copolymers; polyhydroxyethyl acrylate, methylacrylamide monomers; and polychloroprene. In a particular embodiment, the binder is a thermoplastic polymer.

In a particular embodiment of the invention the seed treatment formulation contains at least one polyester, which, in particular, is selected from polylactides, partially aromatic polyesters (copolymers of terephthalic acid, adipic acid and aliphatic diols), polyglycolides, polyhydroxyalkanoates and polytartrates.

The amount of binder (or sticker) in the formulation can vary, but will be in the range of about 0.01 to about 25% of the total weight, more preferably from about 1 to about 15%, and even more preferably from about 5 % to about 10%.

As mentioned above, the coating material can optionally also comprise a filler. The filler can be an absorbent or an inert filler, such as are known in the art, and may include wood flours, cereal flours, tree bark mill, wood meal and nut shell meal, sugars, in particular polysaccharides, activated carbon, fine-grain inorganic solids, silica gels, silicates, clays, chalk, diatomaceous earth, calcium carbonate, magnesium carbonate, dolomite, magnesium oxide, calcium sulfate and the like. Clays and inorganic solids which may be used include calcium bentonite, kaolin, china clay, talc, perlite, mica, vermiculite, silicates, quartz powder, montmorillonite, attapulgite, bole, loess, limestone, lime and mixtures thereof. Sugars which may be useful include dextrin and maltodextrin. Cereal flours include wheat flour, oat flour and barley flour. The filler may also comprise fertilizer substances such as, for example, ammonium sulfate, ammonium phosphate, ammonium nitrate, ureas and mixtures thereof.

The filler is selected so that it will provide a proper microclimate for the seed, for example the filler is used to increase the loading rate of the active ingredients and to adjust the control-release of the active ingredients. The filler can aid in the production or process of coating the seed. The amount of filler can vary, but generally the weight of the filler components will be in the range of about 0.05 to about 75% of the total weight, more preferably about 0.1 to about 50%, and even more preferably about 0.5% to 15%.

It is preferred that the binder (or sticker) be selected so that it can serve as a matrix for the phenylsemicarbazone of formula (I) or the agriculturally acceptable salt thereof. While the binders disclosed above may all be useful as a matrix, it is preferred that a continuous solid phase of one or more binder compounds is formed throughout which is distributed as a discontinuous phase the phenylsemicarbazone of formula (I) or the salt thereof. Optionally, a filler and/or other components can also be present in the matrix. The term "matrix" is to be understood to include what may be viewed as a matrix system, a reservoir system or a microencapsulated system. In general, a matrix system consists of the phenylsemicarbazone of formula (I) or the agriculturally acceptable salt thereof and a filler uniformly dispersed within a polymer, while a reservoir system consists of a separate phase comprising the phenylsemicarbazone of formula (I) or its salt that is physically dispersed within a surrounding, rate-limiting, polymeric phase. Microencapsulation includes the coating of small particles or droplets of liquid, but also to dispersions in a solid matrix.

Especially if the phenylsemicarbazone of formula (I) or the agriculturally acceptable salt thereof used in the coating is an oily type composition and little or no inert filler is present, it may be useful to hasten the drying process by drying the composition. This optional step may be accomplished by means well known in the art and can include the addition of calcium carbonate, kaolin or bentonite clay, perlite, diatomaceous earth, or any absorbent material that is added preferably concurrently with the phenylsemicarbazone of formula (I) or its salt coating layer to absorb the oil or excess moisture. The amount of absorbent necessary to effectively provide a dry coating will be in the range of about 0.5 to about 10% of the weight of the seed.

Optionally, the coating material comprises a plasticizer. Plasticizers are typically used to make the film that is formed by the coating layer more flexible, to improve adhesion and spreadability, and to improve the speed of processing. Improved film flexibility is important to minimize chipping, breakage or flaking during storage, handling or sowing processes. Various plasticizers may be used; however, useful plasticizers include polyethylene glycol, oligomeric polyalkylene glycols, glycerol, alkylbenzylphthalates, in particular butylbenzylphthalate, glycol benzoates and related compounds. The range of plasticizer in the coating layer will be in the range of from about 0.1 % by weight to about 20% by weight.

Agents suitable for solid matrix priming materials which are useful in the present invention include polyacrylamide, starch, clay, silica, alumina, soil, sand, polyurea, polyacrylate, or any other material capable of absorbing or adsorbing the phenylsemicarbazone of formula (I) for a time and releasing that phenylsemicarbazone of formula (I) into or onto the seed. It is useful to make sure that the phenylsemicarbazone of formula (I) or salt thereof and the solid matrix material are compatible with each other. For example, the solid matrix material should be chosen so that it can release the phenylsemicarbazone of formula (I) or its salt at a reasonable rate, for example over a period of minutes, hours, or days.

Penetration enhancers suitable for promoting seed imbibition include agriculturally acceptable surface active compounds. The amount of penetration enhancers will usually not exceed 20% by weight, based on the total weight of the formulation. Preferably, the amount of penetration enhancers will be in the range from 2% to 20% by weight.

Colorants according to the invention are all dyes and pigments which are customary for such purposes. In this context, both pigments, which are sparingly soluble in water, and dyes, which are soluble in water, may be used. Examples which may be mentioned are the colorants, dyes and pigments known under the names Rhodamin B, C. I. Pigment Red 112 and C. I. Solvent Red 1, Pigment Blue 15:4, Pigment Blue 15:3, Pigment Blue 15:2, Pigment Blue 15:1, Pigment Blue 80, Pigment Yellow 1, Pigment Yellow 13, Pigment Red 48:2, Pigment Red 48:1, Pigment Red 57:1, Pigment Red 53:1, Pigment Orange 43, Pigment Orange 34, Pigment Orange 5, Pigment Green 36, Pigment Green 7, Pigment White 6, Pigment Brown 25, Basic Violet 10, Basic Violet 49, Acid Red 51, Acid Red 52, Acid Red 14, Acid Blue 9, Acid Yellow 23, Basic Red 10, Basic Red 108. The amount of colorants will usually not exceed 20 % by weight of the formulation and preferably ranges from 1 to 15 % by weight, based on the total weight of the formulation. It is generally preferred if the colorants are also active as repellents for warm-blooded animals, e. g. iron oxide, TiO₂, Prussian blue, anthraquinone dyes, azo dyes and metal phtalocyanine dyes.

Antifreezes which can be employed especially for aqueous formulations are in principle all those substances which lead to a depression of the melting point of water. Suitable antifreezes comprise alcohols such as methanol, ethanol, isopropanol, butanols, glycol, glycerine, diethylenglycol and the like. Typically, the amount of antifreeze will not exceed 20 % by weight and frequently ranges from 1 to 15 % by weight, based on the total weight of the formulation.

Gelling agents which are suitable are all substances which can be employed for such purposes in agrochemical compositions, for example cellulose derivatives, polyacrylic acid derivatives, xanthan, modified clays, in particular organically modified phyllosilicates and highly-dispersed silicates. A particularly suitable gelling agent is carrageen (Satiagel^{®}). Usually, the amount of gelling agent will not exceed 5 % by weight of the formulation and preferably ranges from 0.5 to 5 % by weight, based on the total weight of the formulation.

Further auxiliary agents that may be present in the seed treatment formulation include solvents, wetters, dispersants, emulsifiers, surfactants, stabilizers, protective colloids, antifoams, and preservatives.

Examples of suitable solvents are water or organic solvents such as aromatic solvents (for example Solvesso products, xylene), paraffins (for example mineral oil fractions), alcohols (for example methanol, butanol, pentanol, benzyl alcohol), ketones (for example cyclohexanone, gamma-butyrolactone), pyrrolidones (NMP, NOP), acetates (glycol diacetate), glycols, fatty acid dimethylamides, fatty acids and fatty acid esters. In principle, solvent mixtures may also be used. However, according to a particular embodiment, the formulations of the present invention contain less than 10 % by weight and preferably less than 6 % by weight of said organic solvents.

Surface active compounds are all those surfactants which are suitable for formulating agrochemical actives, in particular for the phenylsemicarbazone of formula (I) or the agriculturally acceptable salt thereof, and which may be nonionic, cationic, anionic or amphoteric. According to their action, surfactants - sometimes referred to as "additives" - may be divided into wetters, dispersants, emulsifiers or protective colloids; however, these particular groups may overlap and cannot be divided strictly. Typically, the amount of surfactants will not exceed 20 % by weight and frequently ranges from 1 to 15 % by weight, based on the total weight of the formulation.

Suitable wetters are all those substances which promote wetting and which are conventionally used for formulating agrochemical active ingredients. Alkylnaphthalenesulfonates such as diisopropyl- or diisobutylnaphthalenesulfonates can be used preferably.

Dispersants and/or emulsifiers which are suitable are all nonionic, anionic and cationic dispersants or emulsifiers conventionally used for formulating agrochemical active ingredients. The following can preferably be used: nonionic or anionic dispersants and/or emulsifiers or mixtures of nonionic or anionic dispersants and/or emulsifiers.

Suitable nonionic dispersants and/or emulsifiers which may be employed are, in particular, ethylene oxide/alkylene oxide block copolymers, alkylphenol polyglycol ethers and tristryrylphenol polyglycol ethers, for example polyoxyethylene octylphenol ether, ethoxylated isooctylphenol, octylphenol, nonylphenol, alkylphenol polyglycol ether, tributylphenyl polyglycol ether, tristearylphenyl polyglycol ether, alkylarylpolyether alcohols, alcohol and fatty alcohol ethylene oxide condensates, ethoxylated castor oil, polyoxyethylene alkyl ether, ethoxylated polyoxypropylene, lauryl alcohol polyglycol ether acetal, sorbitol esters and methyl cellulose. However, according to a particular embodiment, the formulations of the present invention contain less than 10 % by weight and preferably less than 6 % by weight of ethylene oxide/alkylene oxide block copolymer, and, more particularly, less than 10 % by weight and preferably less than 6 % by weight of said nonionic dispersants and/or emulsifiers.

Suitable anionic dispersants which and/or emulsifiers which may be employed are, in particular, alkali metal, alkaline earth metal and ammonium salts of ligninsulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore arylsulfonate/formaldehyde condensates, for example condensates of sulfonated naphthalene and naphthalene derivatives with formaldehyde, condensates of naphthalene or of naphthalenesulfonic acid with phenol and formaldehyde, ligninsulfonates, lignin-sulfite waste liquors, phosphated or sulfated derivatives of methylcellulose, and salts of polyacrylic acid.

Protective colloids are typically water soluble, amphiphilic polymers. Examples include proteins and denatured proteins such as casein, polysaccharides such as water soluble starch derivatives and cellulose derivatives, in particular hydrophobic modified starch and celluloses, furthermore polycarboxylates such as polyacrylic acid and acrylic acid copolymers, polyvinylalcohol, polyvinylpyrrolidone, vinylpyrrolidone copolymers, polyvinyl amines, polyethylene imines and polyalkylene ethers.

Antifoams which can be employed are all those substances which inhibit the development of foam and which are conventionally used for formulating agrochemical active ingredients. Silicone antifoams, i.e. aqueous silicon emulsions (e.g. Silikon® SRE by Wacker or Rhodorsil® by Rhodia), long chain alcohols, fatty acids and salts thereof, e.g. magnesium stearate are particularly suitable. Usually, the amount of antifoam will not exceed 3 % by weight of the formulation and preferably ranges from 0.1 to 2 % by weight, based on the total weight of the formulation.

Preservatives which can be employed are all preservatives used for such purposes in agrochemical compositions. Examples which may be mentioned are dichlorophene, isothiazolenes and isothiazolones such as 1,2-benzisothiazol-3(2H)-one, 2-methyl-2H-isothiazol-3-one-hydrochloride, 5-chloro-2-(4-chlorobenzyl)-3(2H)-isothiazolone, 5-chloro-2-methyl-2H-isothiazol-3-one, 5-chloro-2-methyl-2H-isothiazol-3-one, 5-chloro-2-methyl-2H-isothiazol-3-one-hydrochloride, 4,5-dichloro-2-cyclohexyl-4-isothiazolin-3-one, 4,5-dichloro-2-octyl-2H-isothiazol-3-one, 2-methyl-2H-isothiazol-3-one, 2-methyl-2H-isothiazol-3-one-calcium chloride complex, 2-octyl-2H-isothiazol-3-one and benzyl alcohol hemiformal. Usually, the amount of preservatives will not exceed 2 % by weight of the formulation and preferably ranges from 0.01 to 1 % by weight, based on the total weight of the formulation.

The skilled person is essentially familiar with agricultural compositions of active ingredients. Examples include water-soluble concentrates (SL, LS), dispersible concentrates (DC), emulsifiable concentrates (EC), emulsions (EW, EO, ES), suspensions (SC, OD, FS), water-dispersible granules (WG, SG), water-dispersible or water-soluble powders (WP, SP, SS, WS), dusts or dustable powders (DP, DS), granules (GR, FG, GG, MG), ULV solutions (UL) and gel formualtions (GF). The skilled worker is familiar with such compositions, for example from Ullmann's Encyclopedia of Industrial Chemistry, Fungicides Chapter 4, 5th ed. on CD-ROM, Wiley-VCH, 1997 and Mollet, H., Grubemann, A., Formulation technology, Wiley VCH Verlag GmbH, Weinheim (Federal Republic of Germany), 2001.

For seed treatment purposes, such compositions may be applied as such or after addition of a suitable liquid, in particular water, in order to dissolve, emulsify, disperse, supend or dilute the composition. The type of the ready-to-use preparation applied to the seeds thus depends on the type of composition used and the method used for treating the seeds.

Such compositions can be prepared in the known manner (see e.g. for review US 3,060,084, EP-A 707 445 (for liquid concentrates), Browning, "Agglomeration", Chemical Engineering, Dec. 4, 1967, 147-48, Perry's Chemical Engineer's Handbook, 4th Ed., McGraw-Hill, New York, 1963, pages 8-57 and et seq. WO 91/13546, US 4,172,714, US 4,144,050, US 3,920,442, US 5,180,587, US 5,232,701, US 5,208,030, GB 2,095,558, US 3,299,566, Klingman, Weed Control as a Science, John Wiley and Sons, Inc., New York, 1961, Hance et al., Weed Control Handbook, 8th Ed., Blackwell Scientific Publications, Oxford, 1989 and Mollet, H., Grubemann, A., Formulation technology, Wiley VCH Verlag GmbH, Weinheim (Germany), 2001, 2. D. A. Knowles, Chemistry and Technology of Agrochemical Formulations, Kluwer Academic Publishers, Dordrecht, 1998 (ISBN 0-7514-0443-8)), for example by extending the active ingredient component with one ore more auxiliary agents.

### The following examples simply illustrate said compositions:

### A Water-soluble concentrates, solutions (SL, LS)

10 parts by weight of the phenylsemicarbazone of formula (I) or the agriculturally acceptable salt thereof are dissolved in 90 parts by weight of water or a water-soluble solvent. As an alternative, wetters or other auxiliaries are added to the phenylsemicarbazone of formula (I) or the agriculturally acceptable salt thereof. The phenylsemicarbazone of formula (I) or the agriculturally acceptable salt thereof dissolves upon dilution with water, whereby a formulation with 10 % (w/w) of metaflumizone or the agriculturally acceptable salt thereof is obtained.

### B Dispersible concentrates (DC)

20 parts by weight of the phenylsemicarbazone of formula (I) or the agriculturally acceptable salt thereof are dissolved in 70 parts by weight of cyclohexanone with addition of 10 parts by weight of a dispersant, for example polyvinylpyrrolidone. Dilution with water gives a dispersion, whereby a formulation with 20% (w/w) of the phenylsemicarbazone of formula (I) or the agriculturally acceptable salt thereof is obtained.

### C Emulsifiable concentrates (EC)

15 parts by weight of the phenylsemicarbazone of formula (I) or the agriculturally acceptable salt thereof are dissolved in 7 parts by weight of xylene with addition of calcium dodecylbenzenesulfonate and castor oil ethoxylate (in each case 5 parts by weight). Dilution with water gives an emulsion, whereby a formulation with 15% (w/w) of the phenylsemicarbazone of formula (I) or the agriculturally acceptable salt thereof is obtained.

### D Emulsions (EW, EO, ES)

25 parts by weight of the phenylsemicarbazone of formula (I) or the agriculturally acceptable salt thereof are dissolved in 35 parts by weight of xylene with addition of calcium dodecylbenzenesulfonate and castor oil ethoxylate (in each case 5 parts by weight). This mixture is introduced into 30 parts by weight of water by means of an emulsifier machine (e.g. Ultraturrax) and made into a homogeneous emulsion. Dilution with water gives an emulsion, whereby a formulation with 25% (w/w) of metaflumizone or the agriculturally acceptable salt thereof is obtained.

### E Suspensions (SC, OD, FS)

In an agitated ball mill, 20 parts by weight of the phenylsemicarbazone of formula (I) or the agriculturally acceptable salt thereof are comminuted with addition of 10 parts by weight of dispersants, wetters and 70 parts by weight of water or of an organic solvent to give a fine active compound(s) suspension. Dilution with water gives a stable suspension of the the phenylsemicarbazone of formula (I) or the agriculturally acceptable salt thereof, whereby a formulation with 20% (w/w) of the phenylsemicarbazone of formula (I) or the agriculturally acceptable salt thereof is obtained.

### F Water-dispersible granules (WG, SG)

50 parts by weight of the phenylsemicarbazone of formula (I) or the agriculturally acceptable salt thereof are ground finely with addition of 50 parts by weight of dispersants and wetters and made as water-dispersible or water-soluble granules by means of technical appliances (for example extrusion, spray tower, fluidized bed). Dilution with water gives a stable dispersion or solution of the active compound(s), whereby a formulation with 50% (w/w) of the phenylsemicarbazone of formula (I) or the agriculturally acceptable salt thereof is obtained.

### G Water-dispersible and water-soluble powders (WP, SP, SS, WS)

75 parts by weight of the phenylsemicarbazone of formula (I) or the agriculturally acceptable salt thereof are ground in a rotor-stator mill with addition of 25 parts by weight of dispersants, wetters and silica gel. Dilution with water gives a stable dispersion or solution of the active compound(s), whereby a formulation with 75% (w/w) of the phenylsemicarbazone of formula (I) or the agriculturally acceptable salt thereof is obtained.

### H Dusts and dustable powders (DP, DS)

5 parts by weight of the phenylsemicarbazone of formula (I) or the agriculturally acceptable salt thereof are ground finely and mixed intimately with 95 parts by weight of finely divided kaolin. This gives a dustable product having 5% (w/w) of the phenylsemicarbazone of formula (I) or the agriculturally acceptable salt thereof.

### I Granules (GR, FG, GG, MG),

0.5 part by weight of the phenylsemicarbazone of formula (I) or the agriculturally acceptable salt thereof is ground finely and associated with 95.5 parts by weightof carriers, whereby a formulation with 0.5% (w/w) of the phenylsemicarbazone of formula (I) or the agriculturally acceptable salt thereof is obtained. Current methods are extrusion, spray-drying or the fluidized bed. This gives granules to be applied undiluted for foliar use.

### J ULV solutions (UL)

10 parts by weight of the the phenylsemicarbazone of formula (I) or the agriculturally acceptable salt thereof are dissolved in 90 parts by weight of an organic solvent, for example xylene. This gives a product having 10% (w/w) of the phenylsemicarbazone of formula (I) or the agriculturally acceptable salt thereof, which is applied undiluted for foliar use.

### K Gel formulations (GF)

In an agitated ball mill, 20 parts by weight of the phenylsemicarbazone of formula (I) or the agriculturally acceptable salt thereof are comminuted with addition of 10 parts by weight of dispersants, 1 part by weight of a gelling agent wetters and 70 parts by weight of water or of an organic solvent to give a fine active compound(s) suspension. Dilution with water gives a stable suspension of the metaflumizone or an agriculturally acceptable salt thereof, whereby a formulation with 20% (w/w) of the phenylsemicarbazone of formula (I) or the agriculturally acceptable salt thereof is obtained.

For the seed treatment according to the present invention, powders, such as water-dispersible, water-soluble and dustable powders, dusts and suspensions are preferred. Further, gel formulations are preferred. Also, water-soluble concentrates and emulsions may be expediently used.

According to the present invention, the following formulations are particularly preferred: flowable concentrates (especially FS); solutions (especially LS); powders for dry treatment (especially DS); water dispersible powders for slurry treatment (especially WS); water-soluble powders (especially SS) and emulsions (especially ES). Also preferred are gel formulations (especially GF). These formulation can be applied to the seed diluted or undiluted.

According to a particular embodiment, a FS formulation is used for seed treatment. Typcially, a FS formulation may comprise 1 to 800 g/I of the phenylsemicarbazone of formula (I) or the agriculturally acceptable salt thereof, 1 to 200 g/I surfactant, 0 to 200 g/I antifreezing agent, 0 to 400 g/I of binder, 0 to 200 g/I of a colorant and up to 1 liter of a solvent, preferably water.

According to a further particular embodiment, the seed treatment formulation of the present invention is a seed coating formulation.

Such seed coating formulations comprise the phenylsemicarbazone of formula (I) or the agriculturally acceptable salt thereof, at least one binder (or sticker) and optionally at least one further auxiliary agent that is selected from the group consisting of fillers and plasticizers.

Seed coating formulations comprising binders, fillers and/or plasticizers are well-known in the art. Seed coating formulations are disclosed, for example, in U.S. Pat. Nos. 5,939,356, 5,882,713, 5,876,739, 5,849,320, 5,834,447, 5,791,084, 5,661,103, 5,622,003, 5,580,544, 5,328,942, 5,300,127, 4,735,015, 4,634,587, 4,383,391, 4,372,080, 4,339,456, 4,272,417 and 4,245,432, among others.

The amount of the phenylsemicarbazone of formula (I) or the salt thereof that is included in the coating formulation will vary depending upon the type of seed, but the coating formulation will contain an amount of the phenylsemicarbazone of formula (I) or the salt thereof that is insecticidally effective. In general, the amount of the phenylsemicarbazone of formula (I) or the salt thereof in the coating formulation will range from about 0.005 to about 75% of the total weight. A more preferred range for the phenylsemicarbazone of formula (I) or the salt thereof is from about 0.01 to about 40%; more preferred is from about 0.05 to about 20%.

The exact amount of the phenylsemicarbazone of formula (I) or the salt thereof that is included in the coating formulation is easily determined by one skilled in the art and will vary depending upon the size and other characteristics (surface structure etc.) of the seed to be coated. The phenylsemicarbazone of formula (I) or the salt thereof of the coating formulation must not inhibit germination of the seed and should be efficacious in protecting the seed and/or the plant during that time in the target insect's life cycle in which it causes injury to the seed or plant. In general, the coating will be efficacious for approximately 0 to 120 days, preferably for approximately 0 to 60 days, after sowing.

The coating formulations formed with the phenylsemicarbazone of formula (I) or the salt thereof are capable of effecting a slow rate of release of the phenylsemicarbazone of formula (I) or the salt thereof by diffusion or movement through the matrix into the seed or to the surrounding medium.

The present invention also provides a seed that has been treated by the method described above. It also provides a seed obtainable by the method described above.

Further, the present invention also provides a seed that has been treated with the seed treatment formulation described above, and in particular a seed that is coated with the formulation or contains it. It also provides a seed obtainable by using the formulation described above.

The term "coated with and/or contains" here signifies that the phenylsemicarbazone of formula (I) or the salt thereof is for the most part on the surface of the seed at the time of application, although a greater or lesser part of the the phenylsemicarbazone of formula (I) or the salt thereof may penetrate into the seed, depending on the method of application. When the said seed is (re)planted, it may absorb the phenylsemicarbazone of formula (I) or the salt thereof.

Still further, the present invention relates to a seed, especially an unsown seed, which comprises the phenylsemicarbazone of formula (I) or the agriculturally acceptable salt thereof.

According to one embodiment, such a seed comprising the phenylsemicarbazone of formula (I) or an agriculturally acceptable salt thereof has a coating, wherein the coating comprises the phenylsemicarbazone of formula (I) or the agriculturally acceptable salt thereof. According to a further embodiment, such a seed comprising the phenylsemicarbazone of formula (I) or the agriculturally acceptable salt thereof is a seed whose germinable part and/or natural sheath, shell, pod and/or integument comprise(s) the phenylsemicarbazone of formula (I) or the agriculturally acceptable salt thereof. Also, the phenylsemicarbazone of formula (I) or the agriculturally acceptable salt thereof can be present in both the coating and the germinable part and/or natural sheath, shell, pod and/or integument of the seed.

Preferably, such seeds comprise an effective amount of the phenylsemicarbazone of formula (I) or an agriculturally acceptable salt thereof. Accordingly, the seeds are coated, impregnated or coated and impregnated in such a manner that pest damage during germination and emergence is reduced.

The seeds treated with the phenylsemicarbazone of formula (I) or the salt thereof may also be enveloped with a film overcoating to protect the phenylsemicarbazone coating. Such overcoatings are known in the art and may be applied using conventional fluidized bed and drum film coating techniques.

The seeds of the present invention can be used for the propagation of plants. The seeds can be stored, handled, planted/sowed and tilled.

Unless indicated otherwise, all amounts in % by weight refer to the weight of the total composition (or formulation).

### Examples

The invention will be illustrated by the following examples, which should not be construed as limiting the invention.

### Example 1: Absence of phytotoxicity of metaflumizone

To determine the effect of seed treatment on the viability of seeds and sprouting plants, carrot seeds were either treated with metaflumizone, coated with the insecticide chlorfenvinphos (commercially available under, and herein referred to by, the name Birlane^{™}) or left untreated, then sowed and raised under controlled environmental conditions. At day 20 and day 43, respectively, the percentage of seeds which had sprouted was assessed. Results are shown in Table 1.

**Table 1: Percentage of growing plants**

| | Day 20 | Day 43 |
|---|---|---|
| No treatment | 47% | 51% |
| Treatment with metaflumizone (100 cc) | 42% | 47% |
| Comparison: Treatment with Birlane^{™} | 52% | 56% |

The results are within expected experimental variations. It was concluded that treatment with either metaflumizone or Birlane^{™} exerts no significant influence on the viability of carrot seeds.

### Example 2: Short-term protection of carrots against infestation with Psila rosae

In order to determine the efficacy of seed coating against dipteran larvae, carrot seeds were coated with two different concentrations of metaflumizone, Birlane^{™} or left untreated, then sowed and raised as described in Example 1. At day 35 after sowing, the plants were exposed to infestation by *Psila rosae*, which was monitored by adult trap catches. 300 to 400 insects per trap indicated fair infestation pressure. At days 35 and 91, respectively, 100 plants per field were examined for maggot infestation. Results are shown in table 2.

**Table 2: Percentage of plants infested with Psila rosae**

| | Day 35 | Day 91 |
|---|---|---|
| No treatment | 12% | 23% |
| Coating with metaflumizone (50 ml/unit) | 3% | 12% |
| Coating with metaflumizone (100 ml/unit) | 7% | 10% |
| Comparison: Coating with Birlane^{™} | 9% | 12% |

All test products were applied by seed coating of carrot seeds. Birlane^{™} was applied according to label recommendations for carrots. Metaflumizone was applied at 50 ml and 100 ml formulated product per seed unit, respectively. The assessments of carrot rootfly damage were conducted 35 and 91 daysafter sowing. Infestation was evaluated by assessing 100 carrot roots per treatment, and the number of infested plants was recorded. The figures included in the table show the percentage of damaged plants by treatment.

It was concluded that coating with metaflumizone or Birlane^{™} was effective in reducing early damage by maggots. Metaflumizone proved slightly more efficient than Birlane^{™} in preventing damage to seedlings during the first weeks. All in all, seed coating provided protection for 2 - 3 months.

### Example 3: Absence of long-term effects of seed coating

The objective of this trial was the direct comparison of metaflumizone with the market standard Birlane^{™} at 100 ml product per unit of seed. Activity evaluation considered the residual activity of the products up to 124 days after application.

Carrot seeds were coated or left uncoated, sowed and raised as described in Example 2 and subjected to *Psila rosae* infestation at an approximate density of 300 to 400 insects per trap at days 46 to 53 after sowing. At days 82, 96, 110 and 124, respectively, 100 plants per field were examined for maggot infestation. Results are shown in table 3.

**Table 3: Percentage of plants infested with Psila rosae (long-term)**

| | Day 82 | Day 96 | Day 110 | Day 124 |
|---|---|---|---|---|
| No treatment | 1.5% | 10% | 11 % | 26% |
| Treatment with metaflumizone (100 ml/unit) | 2% | 4% | 10% | 22% |
| Treatment with Birlane^{™} (100 ml/unit) | 0.5% | 2% | 8% | 11 % |

Thus, carrot fly infestation started slowly with the first assessment (day 82) but increased slowly during the course of the trial and reached up to 26% infestation in the untreated control at the last assessment date.

It was concluded that the protective effect of seed treatment with metaflumizone or Birlane^{™}, which had been shown in Example 2 to be effective during the first two to three months, gradually wore off after 3 - 4 months. This effect was more marked with metaflumizone than with Birlane^{™}. Seed treatment with metaflumizone can therefore be considered as ecologically unobjectionable.

### Example 4: Efficacy of metaflumizone against Psila rosae

In order to quantify the effect of metaflumizone against maggots, carrot seeds were coated with different concentrations of metaflumizone, with Birlane^{™} or left uncoated, then sowed and raised as described in the above Examples.

**Table 4: Effective dosage of metaflumizone in the treatment of carrot seeds**

| | Day 70 | Day 97 | Day 116 |
|---|---|---|---|
| No treatment | 0.6% | 43% | 64% |
| Treatment with metaflumizone (25 ml/unit) | 2% | 33% | 73% |
| Treatment with metaflumizone (50 ml/unit) | 1 % | 24% | 61% |
| Treatment with metaflumizone (75 ml/unit) | 0% | 14% | 55% |
| Treatment with metaflumizone (100 ml/unit) | 0% | 29% | 55% |
| Treatment with Birlane^{™} | 0.1 % | 23% | 61 % |

It was concluded that treatment with metaflumizone was as effective as treatment with Birlane^{™}.

### Example 5: Efficacy of metaflumizone against Diabrotica v. virgifera

Metaflumizone reduced root damage in maize caused by *Diabrotica v. virgifera* (1.25 mg metaflumizone per kernel; root damage (scale from 1 to 6): 3.0 to 3.1 (treatment) / 4.2 to 4.4 (control).

According to a further aspect, the present invention relates to a method of controlling molluscs, in particular terrestrial and amphibious snails and slugs, in which molluscs, the plants to be protected from molluscs, or the environment inhabited by molluscs, are or is treated with a phenylsemicarbazone compound of the formula I 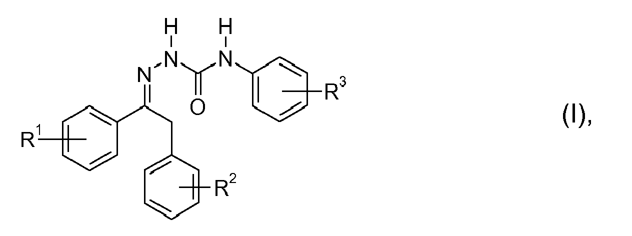 where R¹ and R² are independently of one another hydrogen, cyano, halogen, C₁-C₄-alkyl, C₁-C₄-alkoxy, C₁-C₄-haloalkyl or C₁-C₄-haloalkoxy and R³ is C₁-C₄-alkoxy, C₁-C₄-haloalkyl or C₁-C₄-haloalkoxy,
or an agriculturally acceptable salt thereof.

The invention also relates to molluscicidal compositions comprising the compounds I.

Snails and slugs are significant pests in temperate, subtropical and tropical crops. New cultivation techniques, in particular no tillage and minimum tillage, lead to increased damage by snails and slugs. Since, because of their ecology, many species of snails and slugs are ubiquitous, such species have spread into regions in which they were not originally present. For various reasons, for example because of quarantine regulations (Parella, M. P., Robb, K. and Morishita, P.: Calif. Agriculture 1985, Jan./Feb., 6-8), snail and slug control is becoming increasingly important.

Current commercial molluscicides are either effective but suffer from a risk to non-target organism such as earthworms and hedgehogs, or exhibit a lower toxicity level to non-target organisms but are not truly lethal to molluscs.

Therefore, it has been an object of the present invention to provide a useful molluscicide which is fully effective, e.g. against slugs and snails, but also has a relatively low toxicity to non-target species.

It has been found that these objects are solved by the phenylsemicarbazone compounds of formula I.

The compounds of formula I and their agriculturally acceptable salts are very suitable for controlling snails and slugs in agriculture and horticulture.

The compounds of formula I may have one or more centers of chirality, in which case they are present as mixtures of enantiomers or diastereomers. The present invention relates to the pure enantiomes or diastereomers as well as to the mixtures thereof.

Suitable agriculturally acceptable salts are especially the salts of those cations, which do not have any adverse effect on the molluscicidal action of the compounds I. Thus, suitable cations are in particular the ions of the alkali metals, preferably lithium, sodium and potassium, of the alkaline earth metals, preferably calcium, magnesium and barium, and of the transition metals, preferably manganese, copper, zinc and iron, and also the ammonium ion which may, if desired, carry one to four C₁-C₄-alkyl substituents and/or one phenyl or benzyl substituent, preferably diisopropylammonium, tetramethylammonium, tetrabutylammonium, trimethylbenzylammonium, furthermore phosphonium ions, sulfonium ions, preferably tri(C₁-C₄-alkyl)sulfonium, and sulfoxonium ions, preferably tri(C₁-C₄-alkyl)sulfoxonium.

The organic moieties mentioned in the above definitions of the variables are - like the term halogen - collective terms for individual listings of the individual group members. The prefix Cₙ-Cₘ indicates in each case the possible number of carbon atoms in the group.

The term halogen denotes in each case fluorine, bromine, chlorine or iodine.

### Examples of other meanings are:

The term "C₁-C₄-alkyl" as used herein and the alkyl moieties of alkylamino and dialkylamino refer to a saturated straight-chain or branched hydrocarbon radical having 1 to 4 carbon atoms, i.e., for example methyl, ethyl, propyl, 1-methylethyl, butyl, 1-methylpropyl, 2-methylpropyl or 1,1-dimethylethyl.

The term "C₁-C₄-haloalkyl" as used herein refers to a straight-chain or branched saturated alkyl radical having 1 to 4 carbon atoms (as mentioned above), where some or all of the hydrogen atoms in these radicals may be replaced by fluorine, chlorine, bromine and/or iodine, i.e., for example chloromethyl, dichloromethyl, trichloromethyl, fluoromethyl, difluoromethyl, trifluoromethyl, chlorofluoromethyl, dichlorofluoromethyl, chlorodifluoromethyl, 2-fluoroethyl, 2-chloroethyl, 2-bromoethyl, 2-iodoethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl, 2-fluoropropyl, 3-fluoropropyl, 2,2-difluoropropyl, 2,3-difluoropropyl, 2-chloropropyl, 3-chloropropyl, 2,3-dichloropropyl, 2-bromopropyl, 3-bromopropyl, 3,3,3-trifluoropropyl, 3,3,3-trichloropropyl, 2,2,3,3,3-pentafluoropropyl, heptafluoropropyl, 1-(fluoromethyl)-2-fluoroethyl, 1-(chloromethyl)-2-chloroethyl, 1-(bromomethyl)-2-bromoethyl, 4-fluorobutyl, 4-chlorobutyl, 4-bromobutyl or nonafluorobutyl.

The term "C₁-C₄-alkoxy" as used herein refers to a straight-chain or branched saturated alkyl radical having 1 to 4 carbon atoms (as mentioned above) which is attached via an oxygen atom, i.e., for example methoxy, ethoxy, n-propoxy, 1-methylethoxy, n-butoxy, 1-methylpropoxy, 2-methylpropoxy or 1,1-dimethylethoxy.

The term "C₁-C₄-haloalkoxy" as used herein refers to a C₁-C₄-alkoxy radical as mentioned above which is partially or fully substituted by fluorine, chlorine, bromine and/or iodine, i.e., for example, chloromethoxy, dichloromethoxy, trichloromethoxy, fluoromethoxy, difluoromethoxy, trifluoromethoxy, chlorofluoromethoxy, dichlorofluoromethoxy, chlorodifluoromethoxy, 2-fluoroethoxy, 2-chloroethoxy, 2-bromoethoxy, 2-iodoethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloroethoxy, pentafluoroethoxy, 2-fluoropropoxy, 3-fluoropropoxy, 2,2-difluoropropoxy, 2,3-difluoropropoxy, 2-chloropropoxy, 3-chloropropoxy, 2,3-dichloropropoxy, 2-bromopropoxy, 3-bromopropoxy, 3,3,3-trifluoropropoxy, 3,3,3-trichloropropoxy, 2,2,3,3,3-pentafluoropropoxy, heptafluoropropoxy, 1-(fluoromethyl)-2-fluoroethoxy, 1-(chloromethyl)-2-chloroethoxy, 1-(bromomethyl)-2-bromoethoxy, 4-fluorobutoxy, 4-chlorobutoxy, 4-bromobutoxy or nonafluorobutoxy.

Among the phenylcarbazone compounds I, preference is given to those in which the variables R¹, R² and R³, independently of one another, but in particular in combination, have the meanings given below:
- R¹: is C₁-C₄-haloalkyl, in particular trifluoromethyl;

- R²: is cyano;
- R³: is C₁-C₄-haloalkoxy, in particular trifluoromethoxy.

Most suitable is a compound I where R¹ is trifluoromethyl in meta position, R² is cyano in para position and R³ is trifluoromethoxy in para position.

The phenylsemicarbazone compounds I are disclosed in EP-A 462 456, as insecticidally active ingredients, and can be prepared as described there.

The molluscicidal action of the phenylsemicarbazone compounds I extends to terrestrial and amphibious snails and slugs, for example those of the genera Deroceras (Agriolimax), Arianta, Limax, Helix, Helicogona, Cepaea, Milax, Lymnaea (Galba), Achatina, Theba, Cochlicella, Helicarion and Vaginulus. The snail and slug pests include, for example, the slugs Arion ater, A. lusitanicus, A. hortensis, Agriolimax reticulatus, Limax flavus, L. maximus, Milax gagates, Mariaella dursumierei, Helicarion salius, Vaginula hedleyi and Pamarion pupillaris and the snails Helix aspersa spp., Cepaea nemoralis, Theba pisana, Achatina fulica, A. zanzibarica, Limicolaria kambeul, Bradybaena spp., Cochlodina spp., Helicella spp., Euomphalia spp. and Arianta arbustorum.

The molluscs may be controlled by contacting them, their food supply, habitat, breeding ground or locus, with a molluscicidally effective amount of a phenylsemicarbazone I.

The compounds of formula I are effective through both contact and ingestion (bait, or plant part).

The bait can be a liquid, a solid or a semisolid preparation (e.g. a gel). Solid baits can be formed into various shapes and forms suitable to the respective application e.g. granules, blocks, sticks, disks. Liquid baits can be filled into various devices to ensure proper application, e.g. open containers, spray devices, droplet sources, or evaporation sources. Gels can be based on aqueous or oily matrices and can be formulated to particular necessities in terms of stickyness, moisture retention or aging characteristics.

Suitable formulations for molluscicides are described in, for example, GB-A 2 087 723, EP-A 190 595, DE-A 35 03 608, DE-A 37 06 358 and DE-A 35 00 468.
They generally require a carrier, an edible substance or a bait, a binder and the active ingredient and, if required, conventional additives, such as preservatives, colorants, repellents, water, organic solvents and/or surfactants.

Examples of suitable (solid) carriers are powdered natural minerals, such as kaolins, clays, talc, chalk, quartz, attapulgite, montmorrilonite or diatomaceous earth, and powdered synthetic minerals, such as finely divided silica, alumina and silicates; examples of suitable solid carriers for pellets are crushed and fractionated natural minerals, such as calcite, marble, pumice, sepiolite, dolomite, synthetic pellets of inorganic and organic meals and pellets of organic material, such as sawdust, coconut shells, corn cobs and tobacco stalks.

The edible substance(s) present may be any conventional feed substance which can be used in baits of this type, for example ground cereal products (eg. wheat, oats, barley, rye, corn or rice in the form of grains, flour, coarse meal, bran, germs or bread), oil cake (for example from cottonseed, peanuts, sunflower or poppy seed), malt, yeasts, rice starch, fisch meal, meat meal, sugar beet molasses or residues from fruit pressing, or with species-specific or snail- and slug-specific baits is particularly advantageous, suitable binders, adhesives, stabilizers and microbial inhibitors being used in each case; it is advantageous to add substances with repel birds and mammals, and organic or inorganic dyes or pigments. The purpose of such additives is to repel non-target organisms and to ensure that the action lasts for as long a period as possible.

In order to inhibit deterioration of the bait, a fungistat may be present.

All conventional adhesives which can be used for such purposes may be present as binders. Methylcellulose, sugar, dextrin, starch, alginates, glycols, polyvinylpyrrolidone, ligninsulfonate, gum arabic, polyvinyl alcohol and polyvinyl acetate are preferred. One or more binders may be present.

Examples of preservatives, which may or may not be present, are 2-hydroxybiphenyl, sorbic acid, p-hydroxybenzaldehyde, methyl p-hydroxybenzoate, benzaldehyde, benzoic acid, propyl p-hydroxybenzoate and p-nitrophenol.

Examples of colorants which are suitable additives for repelling birds and mammals are inorganic pigments, such as iron oxide, titanium dioxide and Prussian blue, and organic dyes, such as anthraquinone, azo and metal phthalocyanine dyes. The colorant may be present in the formulation in an amount of 0.1 to 5 wt.%.

Repellents used for repelling warm-blooded animals, such as dogs and hedgehogs, may be any conventional components suitable for this purpose. Examples are nonanoic acid vanillylamide. The repellent may be present in the formulation in an amount of 0.1 to 5 wt.%.

Substances used for attracting soil pests may be any conventional components suitable for this purpose. Aniseed and aniseed oil are examples.

Suitable organic solvents are all organic solvents which can be conventionally used for the preparation of baits. Low boiling organic solvents, such as methanol, ethanol, butanol and methylene chloride, are preferred.

Suitable surfactants are nonionic substances, such as condensates of polyalkylene oxides and alkylphenols and fatty acid polyoxyalkylene esters, for example octylphenoxypolyoxyethanol, cationic substances, such as quaternary ammonium salts, e.g. cetyltrimethylammonium chloride or cetylpyridinium chloride, and anionic substances, such as the sodium salts of the long-chain alkylsulfates, e.g. sodium laurylsulfate, salts of alkylarylsulfates, the sodium salt of desoxycholic acid, the sodium salt of taurocholic acid and the sodium salt of tauroglycocholic acid.

The formulations may also contain other active ingredients, for example plant protection agents such as other pesticides, insecticides, herbicides, fungicides, or bactericides, fertilizers such as ammonium nitrate, urea, potash, and superphosphate, phytotoxicants and plant growth regulators, safeners and nematicides. These additional ingredients may be used sequentially or in combination with the molluscicides of the present invention, if appropriate also added only immediately prior to use (tank mix).

Another preferred form of application is seed dressing with a formulation conventionally used for dressings.

Conventional seed treatments include for example flowable concentrates, solutions, powders for dry treatment, water dispersible powders for slurry treatment, water soluble powders and emulsion. Application to the seeds is carried out before sowing, either directly on the seeds or after having pregerminated the latter.

Stickers / adhesion agents are commonly added to improve the adhesion of the active materials on the seeds after treatment. Suitable adhesives are block copolymers EO/PO surfactants but also polyvinylalcoholsl, polyvinylpyrrolidones, polyacrylates, polymethacrylates, polybutenes, polyisobutylenes, polystyrene, polyethyleneamines, polyethyleneamides, polyethyleneimines (Lupasol^{®}, Polymin^{®}), polyethers and copolymers derived from these polymers.

The content of active ingredient in the individual application forms can vary within wide limits. In general, "pesticidally effective amount" means the amount of active ingredient needed to achieve an observable effect on the molluscs. The pesticidally effective amount can vary for the various compounds/compositions used in the invention. A pesticidally effective amount of the compositions will also vary according to the prevailing conditions such as application period, weather, locus, mode of application and the like.

Usually, from 0.001 to 90, preferably from 0.5 to 50, in particular from 1 to 10, % by weight of active ingredient in the case of granular formulations and from 10 to 90 % by weight of active ingredient in the case of seed dressings, is sufficient to achieve a detectable effect on the molluscs.

The application may be carried out before or after the infection of the locus, growing crops, or harvested crops by the molluscs.

"Locus" means a habitat, breeding ground, plant, seed, soil, area, material or environment in which a pest or parasite is growing or may grow.

Effective amounts suitable for use in the method of invention may vary depending upon the particular formula I compound, target mollusc species, method of application, application timing, weather conditions, mollusc habitat, and the like.

In general, the application rate of active ingredient I is about 0.3 to 30, preferably 1 to 10, kg/ha.

### FORMULATION EXAMPLE 1

2 kg of a compound I, 8 kg of calcium stearate, 0.2 kg of sodium benzoate, 20 kg of chalk, 0.5 kg of a blue dye and 69.3 kg of wheat bran are mixed in a mixer. This mixture is then moistened with sufficient water and kneaded in a kneader. Thereafter, the moist mixture is shaped in an extruder to give snail or slug bait pellets having a diameter of 3 mm, and dried at no higher than 60°C.

### FORMULATION EXAMPLE 2

To prepare a seed dressing,
480 g of a compound I,
20 g of a commercial phenolsulfonic acid/urea/formaldehyde condensate,
40 g of an ethylene/propylene block copolymer having a molecular weight of about 10,000,
2 g of Xanthane rubber,
0.5 g of Rhodamine FB,
80 g of 1,2-propylene glycol and
5 g of silicone antifoam
are mixed and the mixture is made up to 1 litre with water.

### USE EXAMPLE 1

For this example, a 240 g/I suspension concentrate of a compound I with R¹ = trifluoromethyl in meta position, R² = cyano in para position and R³ = trifluoromethoxy in para position was used with an application rate of 240 gram active ingredient per ha.

The trial was carried out in the greenhouse under practical conditions in sandy soil. Three lettuce plants, variety Filipo, growth stage 45-46, were used as plot size. The lettuce was sprayed with a solution of the above mentioned compound at a rate of 240 gram active ingredient per hectare with 500 I/ha water. For spraying was a single Tee-jet^{®} nozzle, model 8002 (from Spraying System Mobile Systems Division, Wheaton, IL, USA), at 3 atmosphere pressure used.
After the spray application, the plots were covered by net cages (diameter 40 cm) and 20 snails (sexually mature individuals of Helix hortensis) were added to every plot.

The assessment method was counting the numbers of dead, alive active and alive inactive snails. The differentiation between active and inactive was by touching them with a needle. Also an estimation of eating damages was recorded.
1 days after placing the snails into the plots, 47 % were inactive.
2 days after placing the snails into the plots, 63 % were inactive.
4 days after placing the snails into the plots, 71 % were dead and further 12 % were inactive.

## Claims

1. A seed treatment formulation comprising a phenylsemicarbazone of the formula(I) 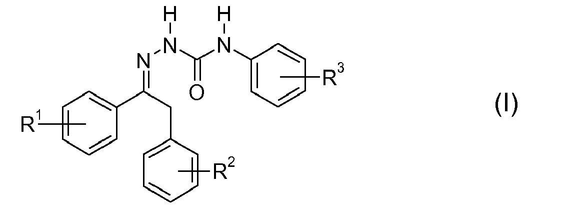 wherein R¹ and R² are each independently hydrogen, halogen, CN, C₁-C₄ alkyl, C₁-C₄ alkoxy, C₁-C₄ haloalkyl or C₁-C₄ haloalkoxy and R³ is C₁-C₄ alkoxy, C₁-C₄ haloalkyl or C₁-C₄ haloalkoxy,
or an agriculturally acceptable salt thereof
and at least one seed treatment auxiliary agent.

2. The formulation according to claim 1, wherein R¹ is 3-CF₃ and R² is 4-CN and R³ is 4-OCF₃.

3. The formulation according to claim 1 or 2, which comprises between 0.005% by weight and 95% by weight of the phenylsemicarbazone or the agriculturally acceptable salt thereof.

4. The formulation according to any one of claims 1 to 3, wherein the formulation comprises a mammal/bird repellent.

5. The formulation according to claim 4, wherein the amount of mammal/bird repellent is from 0.1 % by weight to 5% by weight of the formulation.

6. The formulation according to claim 1, wherein the seed treatment auxiliary agent is a seed coating auxiliary agent, a solid matrix material, a penetration enhancer, a colorant, an antifreeze, or a gelling agent.

7. The formulation according to claim 6, wherein the seed coating auxiliary agent is a binder.

8. The formulation according to claim 7, wherein the binder comprises an adhesive polymer, preferably a polyester.

9. The formulation according to claim 7 or 8, wherein the amount of binder is from 1 % of weight to 15% of weight of the formulation.

10. The formulation according to any one of claims 6 to 9, wherein the amount of colorant is from 1% by weight to 15% by weight of the formulation.

11. The formulation according to any one of claims 6 to 10, wherein the amount of antifreeze is from 1% by weight to 15% by weight of the formulation.

12. The formulation according to any one of claims 6 to 11, wherein the amount of gelling agent is from 0.5% by weight to 5% by weight of the formulation.

13. The formulation according to any one of claims 6 to 12, wherein the amount of penetration enhancer is from 2% by weight to 20% of the formulation.
